# EUROPEAN PATENT APPLICATION

(11) **EP 4 708 449 A1**
(43) Date of publication of application: **11.03.2026**
(21) Application number: 25192989.9
(22) Date of filing: 31.07.2025
(51) Int. Cl.: H01M 10/48, H01M 50/204, H01M 50/367, H01M 50/383, H01M 50/317

(54) **BATTERY BOX WITH STRUCTURE SECURING FIRE SAFETY AND ENABLING MULTI-LAYER STACKING**

(30) Priority: 27.08.2024 KR 20240115423
(71) Applicant: SAMSUNG SDI CO., LTD., Yongin-si, Gyeonggi-do 17084 (KR)
(72) Inventor: PARK, JongHo, 17084 Yongin-si, Gyeonggi-do (KR)
(74) Representative: Gulde & Partner

(57) **Abstract**

The present disclosure relates to a battery box having a structure that provides fire safety and enables multi-layer stacking. The battery box according to the present disclosure includes a first enclosure configured to accommodate a plurality of battery modules therein, a deflagration panel configured to rupture to allow flammable to be discharged from the first enclosure, when the flammable gas is generated in the first enclosure and pressure inside the first enclosure increases to a value greater than or equal to a threshold pressure, a first duct which has a lower end connected to the deflagration panel and an upper end connected to an exhaust port spaced a distance apart from the battery box and which guides the flammable gas discharged from the deflagration panel to the exhaust port, and a stacking support positioned on the first enclosure and configured to support a second enclosure stacked on the first enclosure.

## Description

### FIELD

The present disclosure relates to a battery box having a structure that provides fire safety and enables multi-layer stacking.

### BACKGROUND

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly comprising a positive electrode and a negative electrode, a case accommodating the same, and electrode terminals connected to the electrode assembly.

The above information disclosed in this Background section is for enhancement of understanding of the background of the present disclosure, and therefore, it may contain information that does not constitute related (or prior) art.

### SUMMARY

The present disclosure is directed to providing a battery box having a structure capable of discharging flammable gases and flames to the outside of the enclosure through a duct structure when a fire occurs in a battery box. The check valve of the batter box might contribute a structure capable of discharging flammable gases and flames to the outside of the enclosure through.

A battery box according to embodiments of the present disclosure includes a plurality of battery modules. The battery box includes a first enclosure configured to accommodate the plurality of battery modules therein, a deflagration panel which is disposed on the first enclosure and which is configured to rupture to allow flammable gas generated within the first enclosure to be discharged upward from the first enclosure, when the flammable gas is generated in the first enclosure and pressure inside the first enclosure increases to a value greater than or equal to a threshold pressure, a first duct which has a lower end connected to the deflagration panel and an upper end connected to an exhaust port spaced a distance apart from the battery box and which guides the flammable gas discharged from the deflagration panel to the exhaust port, and a stacking support positioned on the first enclosure and configured to support a second enclosure stacked on the first enclosure. When the second enclosure is stacked on the first enclosure, the first duct may be connected to a second duct connected to a second deflagration panel disposed on the second enclosure.

The first duct may be equipped with a check valve therein.

The check valve may block a second flammable gas flowing in from the second duct from flowing into the first enclosure.

The battery box may further include a fire detection sensor configured to detect a fire in the first enclosure and a communication device configured to transmit a fire detection signal generated based on a signal from the fire detection sensor to another battery box.

The fire detection sensor may be any one of a temperature sensor and/or a smoke detector.

The fire detection sensor may be a pressure sensor mounted on the deflagration panel.

The battery box may further include a communication device configured to receive a fire detection signal, from a second battery box which includes the second enclosure, the fire detection signal indicating that a fire has occurred in the second battery box, and a valve controller configured to control the check valve to block the flammable gas flowing in from the second duct from flowing into the first enclosure when the fire detection signal is received by the communication device.

A method to be performed when a fire occurs in the battery box according to embodiments of the present disclosure includes determining whether a fire detection signal is generated from the fire detection sensor, and when the fire detection signal is generated from the fire detection sensor, transmitting the fire detection signal to a second battery box including the second enclosure. When the second enclosure is stacked on the first enclosure, the first duct may be connected to a second duct connected to a second deflagration panel disposed on the second enclosure and the first duct may be equipped with a check valve therein.

The method may further include checking whether the second battery box has transmitted a second fire detection signal, and when the second fire detection signal is received from the second battery box, operating the check valve to block a second flammable gas flowing in from the second duct from flowing into the first enclosure.

In some embodiments, the method further comprises determining whether the fire detection signal is generated comprises determining whether the fire detection signal is generated based on at least one measurement from the fire detection sensor.

In some embodiments, the fire detection sensor is any one of a temperature sensor and/or a smoke detector.

In some embodiments, the fire detection sensor is a pressure sensor mounted on the deflagration panel.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

### BRIEF DESCRIPTION OF THE DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view of a battery box arranged in a single-layer stack;
FIG. 2 is a view illustrating a state in which flames are discharged upward from a deflagration panel of the battery box;
FIG. 3 is a view illustrating a state in which battery boxes according to embodiments of the present disclosure are stacked in two layers;
FIG. 4 is a block diagram illustrating a configuration of a battery box according to embodiments of the present disclosure; and
FIG. 5 is a flowchart for describing an operation method when a fire occurs in battery boxes stacked in multiple layers.

### DETAILED DESCRIPTION

Exemplary embodiments of the present disclosure will be described below in detail with reference to the accompanying drawings. Prior to the description, it is noted that the terms or words used in this specification and claims should not be construed as being limited to common or dictionary meanings but instead should be understood to have meanings and concepts in agreement with the present disclosure based on the principle that an inventor can define the concept of each term suitably in order to describe his/her own invention in the best way possible. Accordingly, since the embodiments described in this specification and the configurations illustrated in the drawings are only an example of the present disclosure and they do not cover all the technical ideas of the present disclosure, it should be understood that various changes and modifications may be made at the time of filing this application.

It will be further understood that the terms "comprises/includes" and/or "comprising/including" when used herein, specify the presence of stated features, integers, steps, operations, elements, components, and/or groups thereof, but do not preclude the presence or addition of one or more other features, integers, steps, operations, elements, components, and/or groups thereof.

In order to facilitate understanding of the present disclosure, the accompanying drawings are not drawn to scale and the dimensions of some components may be exaggerated. It should be noted that the same reference numerals are designated to the same components in different embodiments. Reference to two compared elements, features, etc. as being "the same" means that they are "substantially the same". Therefore, the phrase "substantially the same" may include a deviation that is considered low in the art, for example, a deviation of 5% or less. The uniformity of any parameter in a given region may mean that it is uniform from an average perspective.

Although the terms such as "first" and/or "second" are used to describe various components, these components are not limited by these terms, of course. These terms are only used to distinguish one component from another component. Thus, unless specifically stated to the contrary, a first component may be termed a second component without departing from the teachings of exemplary embodiments.

Throughout the specification, unless otherwise stated, each element may be singular or plural.

Arrangement of any component "above (or below)" or "on (or under)" a component may mean that any component is disposed in contact with the upper (or lower) surface of the component, as well as that other components may be interposed between the element and any element disposed on (or under) the element.

It will be understood that, when a component is referred to as being "connected", "coupled", or "joined" to another component, not only can it be directly "connected", "coupled", or "joined" to the other element, but also can it be indirectly "connected", "coupled", or "joined" to the other element with other elements interposed therebetween.

As used herein, the term "and/or" includes any and all combinations of one or more of the associate listed items. The use of "may" when describing embodiments of the present disclosure relates to "one or more embodiments of the present disclosure". Expressions such as "at least one" and "one or more" preceding a list of elements modify the entire list of elements and do not modify the individual elements in the list.

Throughout the specification, when "A and/or B" is stated, it means A, B, or A and B, unless otherwise stated. In addition, when "C to D" is stated, it means C or more and D or less, unless specifically stated to the contrary.

When the phrase such as "at least one of A, B, and C", "at least one of A, B, or C", "at least one selected from the group of A, B, and C", or "at least one selected from among A, B, and C" is used to designate a list of elements A, B, and C, the phrase may refer to any and all suitable combinations.

The term "use" may be considered synonymous with the term "utilize". As used herein, the terms "substantially," "about," and similar terms are used as terms of approximation rather than as terms of degree, and are intended to account for inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Accordingly, a first element, component, region, layer, or section discussed below may be termed a second element, component, region, layer, or section without departing from the teachings of exemplary embodiments.

For ease of explanation in describing the relationship of one element or feature to another element(s) or feature(s) as illustrated in the drawings, spatially relative terms such as "beneath", "below", "lower", "above", "upward", and "upper" may be used herein. The spatially relative positions may be understood as disclosed in the drawings.

The terminology used herein is for the purpose of describing embodiments of the present disclosure and is not intended to limit the present disclosure.

Hereinafter, embodiments of the present disclosure will be described in detail with reference to the accompanying drawings. In describing the present disclosure, in order to facilitate an overall understanding of the present disclosure, the same reference numbers will be used for the same components irrespective of the drawing numbers.

Currently, battery boxes are installed in a single-layer stacks at customer sites. Therefore, installation density is limited by the capacity of battery cells included in a battery box. In order to increase installation density, it is necessary to stack battery box enclosures (hereinafter referred to as enclosures) in multiple layers. However, in current battery box structures, when flames are discharged from a deflagration panel positioned on an enclosure, there is a risk that the flames may spread to adjacent enclosures. That is, only when a structure, which is capable of discharging flammable gases and flames generated in the event of a fire or other events outside of the enclosure without spreading the flammable gases and flames to adjacent enclosures, is provided, installation density may be increased through multi-layer stacking of battery boxes.

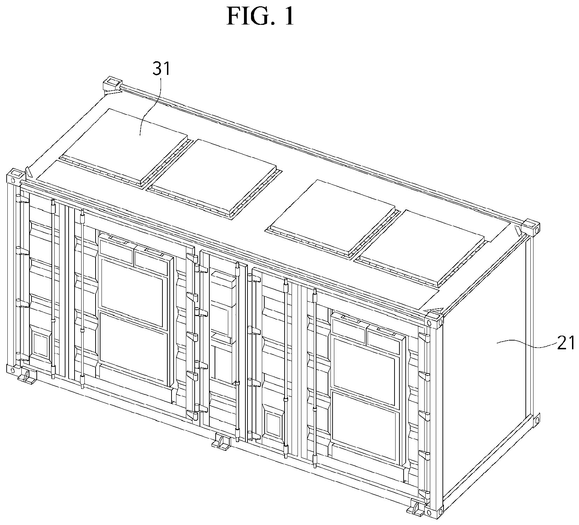

FIG. 1 is a perspective view of a battery box arranged in a single-layer stack.

A battery box is a charging/discharging device that includes a plurality of battery modules. The battery box of FIG. 1 has a structure in which an enclosure 21 accommodates a plurality of battery modules, and a deflagration panel 31 is disposed on the enclosure 21. Hereinafter, the deflagration panel 31 may be referred to a first deflagration panel.

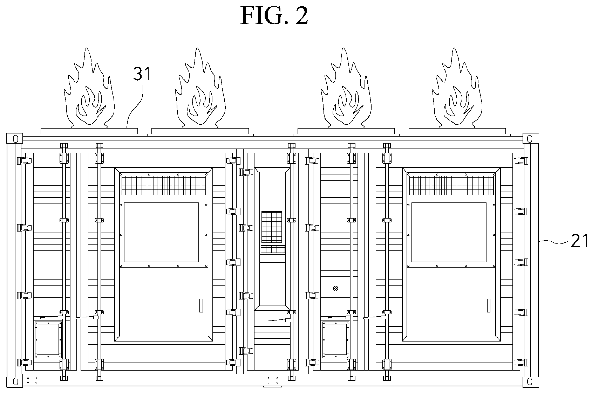

The battery box shown in FIG. 1 cannot be stacked in multiple layers (including two layers). This is because when an event such as a fire occurs in the battery box, flammable gases and flames are discharged upward through the deflagration panel 31, and when the battery box is stacked in multiple layers, flames discharged through the deflagration panel 31 are directly transmitted to an adjacent enclosure, which increases the risk of fire spreading (e.g., see FIG. 2).

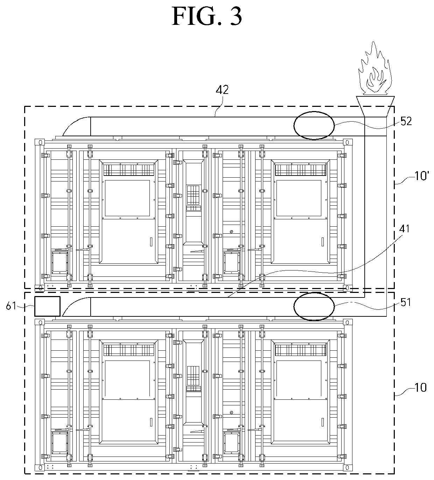

FIG. 3 is a view illustrating a state in which battery boxes according to embodiments of the present disclosure are stacked in two layers. Battery boxes 10 and 10' shown in FIG. 3 have a structure which provides fire safety and enables multi-layer stacking of the battery boxes.

The battery box 10 has a duct structure capable of discharging flammable gases and flames.

Specifically, a duct 41 has a lower end connected to the deflagration panel 31 and an upper end connected to an exhaust port spaced a certain distance apart from the battery box 1, thereby guiding flammable gases or flames discharged from the deflagration panel 31 to the exhaust port. The battery box 10' stacked on the battery box 10 may also include a duct 42 that may discharge flammable gases and flames to the exhaust port, and the duct 42 of the battery box 10' may be connected to the duct 41 of the battery box 10. Hereinafter, the duct 41 may be referred to a first duct, whereas the duct 42 may be referred to a second duct.

In addition, a check valve 51 may be mounted in the duct 41 of the battery box 10. The check valve 51 is a valve that prevents gases or flames from an adjacent battery box, in which a fire has occurred, from flowing into the battery box 10 in a normal state.

For example, the check valve 51 of the battery box 10 prevents gases or flames generated in the battery box 10' from flowing into the enclosure 21, and a check valve 52 of the battery box 10' prevents gases or flames generated in the battery box 10 from flowing into an enclosure 22 (not shown) of the battery box 10'. Hereinafter, the check valve 51 may be referred to a first check valve, whereas the check valve 52 may be referred to a second check valve. Further, the enclosure 21 may be referred to a first enclosure, whereas the enclosure 22 may be referred to a second enclosure.

Meanwhile, a stacking support 61 installed on an upper end of the enclosure 21 of the battery box 10 is a structure for supporting the battery box 10' stacked on the enclosure 21. When the battery boxes are stacked in two layers, installation density doubles.

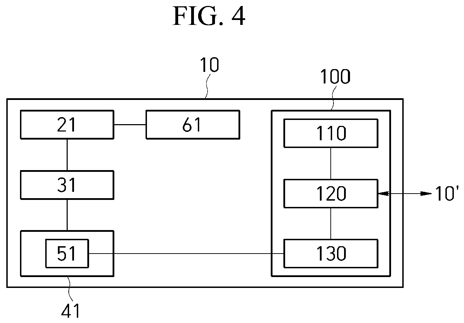

FIG. 4 is a block diagram illustrating a configuration of a battery box according to embodiments of the present disclosure. The battery box of FIG. 4 includes a plurality of battery modules and has a structure which provides fire safety and enables a multi-layer stacking.

Referring to FIG. 4, a battery box 10 according to embodiments of the present disclosure includes an enclosure 21, a deflagration panel 31, a duct 41, a check valve 51, a stacking support 61, and a fire extinguishing receiver 100. The fire extinguishing receiver 100 includes a fire detection sensor 110, a communication device 120, and a valve controller 130.

The battery box 10 shown in FIG. 4 is provided according to some example embodiments. The components of the battery box 10 according to the present disclosure are not limited to the embodiment shown in FIG. 4 and features of which may be added, changed, or deleted as necessary. The enclosure 21 accommodates the plurality of battery modules therein.

The deflagration panel 31 is disposed on the enclosure 21, and when flammable gases are generated in the enclosure 21 and pressure inside the enclosure 21 increases to a certain pressure or more, the deflagration panel 31 ruptures to discharge the flammable gases upward from the enclosure 21. Specifically, when a battery event such as a fire occurs, the pressure inside the enclosure 21 increases due to the generation of flammable gases. When the internal pressure increases to a certain pressure or more (for example, 0.1 bar, or 10% of atmospheric pressure), the deflagration panel 31 which comprises a thin film ruptures to discharge the flammable gases and flames in the enclosure 21 to the outside of the enclosure 21.

The duct 41 has a lower end connected to the deflagration panel 31 and an upper end connected to an exhaust port spaced a certain distance from the battery box 10 and/or the deflagration panel 31. The duct 41 guides flammable gases or flames discharged from the deflagration panel 31 to the exhaust port. When an enclosure 22 (not shown) of another battery box 10' (not shown) is stacked on the enclosure 21, the duct 41 may be connected to a duct 42 (not shown) of the other battery box 10' (not shown). The duct 42 is connected to a deflagration panel 32 (not shown) disposed on the enclosure 22.

The check valve 51 may be mounted in the duct 41. The check valve 51 functions to prevent flammable gases flowing in from the duct 42 of another battery box 10' from flowing into the enclosure 21.

The stacking support 61 is disposed on the enclosure 21 and is a structure for supporting the enclosure 22 of the battery box 10' stacked on the enclosure 21.

The fire detection sensor 110 generates a fire detection signal when a fire is detected in the enclosure 21. The fire detection sensor 110 may be a temperature sensor, a gas detector, a smoke detector, and/or the like.

In some embodiments, additionally or alternatively, the fire detection sensor 110 may be a pressure sensor mounted on the deflagration panel 31. Specifically, there is no change in pressure before the operation (e.g., rupture) of the deflagration panel 31, but when the deflagration panel 31 operates (e.g., ruptures), pressure near the deflagration panel 31 increases rapidly so that the pressure sensor may detect the increase in pressure.

The fire extinguishing receiver 100 detects a fire through the fire detection sensor 110 when a fire occurs in the battery box 10 and transmits a fire detection signal to another battery box through the communication device 120. In addition, the fire extinguishing receiver 100 may receive a fire detection signal, which indicates that a fire has occurred in another battery box, from another battery box through the communication device 120.

The communication device 120 is a device that transmits or receives signals and data to or from a communication device included in another battery box through a wireless communication method or a wired communication method.

When a fire detection signal of the battery box 10' is received by the communication device 120, the valve controller 130 operates the check valve 51 as a contact point, thereby controlling the check valve 51 in order to block the duct 41 such that flammable gases flowing in from the duct 42 of the battery box 10' do not flow into the enclosure 21.

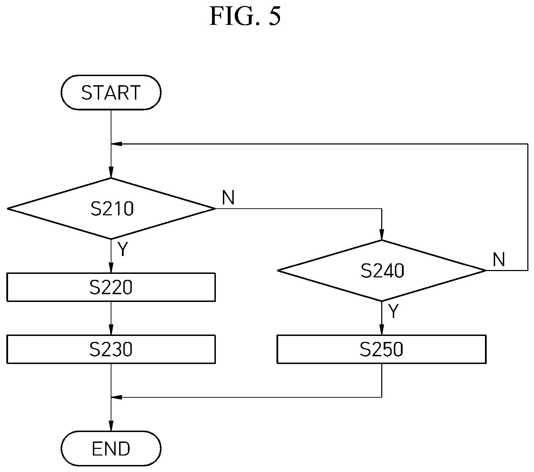

That is, when the valve controller 130 receives a fire detection signal from the communication device 120 indicating that a fire has occurred in another battery box, the valve controller 130 transmits an operation signal to a contact point connected to the check valve 51 to block the check valve 51 and prevent flammable gases and flames from flowing into the enclosure 21. Meanwhile, the fire extinguishing receiver 100 may include a general type and an addressable type. The fire extinguishing receiver 100 may identify a location of the battery box at which a fire has occurred. In the case of the fire extinguishing receiver 100 of the general type, information that protection has taken place in the event of a fire may be transmitted to each battery box, and a battery management system (BMS) included in another battery box may receive the information to perform control such as blocking the check valve 51. In addition, in the case of the fire extinguishing receiver 100 of the addressable type, since each fire extinguishing receiver 100 has an identifier (ID), when a fire has occurred, another fire extinguishing receiver may identify the ID of the fire extinguishing receiver 100 of a corresponding battery box and may perform control such as blocking the check valve 51. Identifying a location of the battery box 10 at which a fire has occurred or the ID of the fire extinguishing receiver 100 is useful for an adjacent or co-stacked battery box to prevent the spread of fire through control such as blocking the check valve 51. FIG. 5 is a flowchart for describing an operation method when a fire occurs in battery boxes. The operation method of FIG. 5 is performed by the battery box 10 of FIG. 4.

As described with reference to FIGS. 3 and 4, it is assumed that another battery box 10' is stacked on the battery box 10, the duct 41 is connected to the duct 42 of the other battery box 10', and the duct 42 is connected to the deflagration panel 32 disposed on the enclosure 22 of the other battery box 10'.

Referring to FIG. 5, the operation method when a fire occurs in battery boxes according to embodiments of the present disclosure includes operations S210 to S250. The operation method when a fire occurs in battery boxes shown in FIG. 5 is carried out according to some exemplary embodiments, and operations of the operation method when a fire occurs in battery boxes according to the present disclosure are not limited to the embodiment shown in FIG. 5, and may be added, changed, or deleted as necessary.

Operation S210 is an operation of determining whether a fire is detected in the battery box 10. That is, the fire extinguishing receiver 100 determines whether a fire detection signal is generated from the fire detection sensor 110. When the fire detection signal is generated, operation S220 is performed, otherwise operation S240 is performed.

Operation S220 is an operation of transmitting the fire detection signal to another battery box.

When the fire detection signal is generated from the fire detection sensor, the fire extinguishing receiver 100 transmits the fire detection signal to a fire extinguishing receiver 100' of another battery box 10' included in the enclosure 22.

Operation S230 is an operation in which another battery box 10' operates the check valve 52 in the duct 42 connected to the deflagration panel 32 to prevent flammable gases and flames generated in the battery box 10 from flowing into another battery box 10'.

Operation S240 is an operation of checking whether another battery box 10' has transmitted the fire detection signal. When the fire extinguishing receiver 100 receives the fire detection signal transmitted from another battery box 10', operation S250 is performed, the process returns to operation S210.

Operation S250 is an operation in which, when the fire extinguishing receiver 100 of the battery box 10 receives the fire detection signal from another battery box 10', the valve controller 130 operates the check valve 51 to block flammable gases flowing in from the duct 42 of another battery box 10' from flowing into the enclosure 21.

The above-described operation method when a fire occurs in a battery box has been described with reference to the flowchart shown in the drawing. For a brief description, the method has been illustrated and described through a series of blocks, but the present disclosure is not limited to the order of the blocks. In other words, some blocks may be executed simultaneously with other blocks or in a different order from those illustrated and described in this specification, and various divergences, flow paths, and block sequences may also be implemented if they give equivalent or similar results. In addition, in order to implement the method described in the specification, it is also possible not to perform the operations of all blocks.

Meanwhile, in the description with reference to FIG. 5, each operation may be further divided into additional operations or combined into fewer operations according to embodiments of the present disclosure. In addition, some operations may be omitted as necessary, and a sequence of operations may be changed. In addition, regardless of other omitted descriptions, the contents of FIGS. 1 to 4 may be applied to the contents of FIG. 5. In addition, the contents of FIG. 5 may be applied to the contents of FIGS. 3 and 4.

According to embodiments of the present disclosure, battery boxes can be stacked in multiple layers, thereby increasing an installation density per unit area.

According to embodiments of the present disclosure, from the customer's perspective, an installation cost per unit area and a site area can be reduced, thereby reducing the initial investment cost.

According to embodiments of the present disclosure, in the event of a fire occurring in a battery box, flammable gases and flames generated in the battery box can be discharged to the outside of the enclosure to prevent the fire from spreading to an adjacent enclosure, thereby minimizing explosion risk and increasing fire safety.

The effects obtainable in the present disclosure are not limited to the effects described above, and other effects that are not described will be clearly understood by a person skilled in the art from the description herein.

However, aspects and features of the present disclosure are not limited to those described above, and other aspects and features not mentioned will be clearly understood by a person skilled in the art from the detailed description, described herein.

Although the present disclosure has been described above with respect to embodiments thereof, the present disclosure is not limited thereto. Various modifications and variations can be made thereto by those skilled in the art within the scope of the appended claims.

## Claims

1. A battery box (1, 10, 10') including a plurality of battery modules, comprising:
a first enclosure (21) configured to accommodate the plurality of battery modules therein;
a first deflagration panel (31) which is disposed on the first enclosure (21) and is configured to rupture to allow flammable gas or flames generated within the first enclosure (21) to be discharged upward from the first enclosure (21), when the flammable gas or flmes is generated in the first enclosure (21) and pressure inside the first enclosure (21) increases to a value greater than or equal to a threshold pressure;
a first duct (41) which has a lower end connected to the first deflagration panel (31 ) and an upper end connected to an exhaust port spaced a distance apart from the battery box (1, 10, 10') and which guides the flammable gas or flames discharged from the deflagration panel (31) to the exhaust port; and
a stacking support (61) positioned on the first enclosure (21) and configured to support a second enclosure (21) stacked on the first enclosure (21).

2. The battery box (1, 10, 10') as claimed in claim 1, wherein when the second enclosure (22) is stackable on the first enclosure (21), the first duct (41) is connectable to a second duct (42) connected to a second deflagration panel (32) disposed on the second enclosure (22).

3. The battery box (1, 10, 10') as claimed in claim 1 or 2, wherein the first duct (41) is equipped with a check valve (51) therein.

4. The battery box (1, 10, 10') as claimed in claim 3, wherein the check valve (51) is configured to block a second flammable gas flowing from the second duct (42) from flowing into the first enclosure (21).

5. The battery box (1, 10, 10') as claimed in any of the preceding claims, further comprising:
a fire detection sensor (110) configured to detect a fire in the first enclosure (21); and
a communication device (120) configured to transmit a fire detection signal from the fire detection sensor (110) to another battery box (1, 10, 10').

6. The battery box (1, 10, 10') as claimed in claim 5, wherein the fire detection sensor (110) is a temperature sensor and/or a smoke detector.

7. The battery box (1, 10, 10') as claimed in claim 5, wherein the fire detection sensor (110) is a pressure sensor mounted on the first deflagration panel (31).

8. The battery box (1, 10, 10') as claimed in any of the preceding claims, further comprising:
a communication device (120) configured to receive a fire detection signal, from a second battery box (10') including the second enclosure (21), the fire detection signal indicating that a fire has occurred in the second battery box (10'); and
a valve controller (130) configured to control the check valve (51) to block the flammable gas flowing from the second duct (42) from flowing into the first enclosure (21) when the fire detection signal is received by the communication device (120).

9. A method to be performed when a fire occurs in a battery box (1, 10, 10') of any of the preceding claims, the method comprising:
determining whether a fire detection signal is generated from the fire detection sensor (110); and
when the fire detection signal is generated from the fire detection sensor (110), transmitting the fire detection signal to a second battery box (1, 10, 10') including the second enclosure (22).

10. The method as claimed in claim 9, wherein the operation method further comprises checking whether the second battery box (1, 10, 10') has transmitted a second fire detection signal, and when the second fire detection signal is received from the second battery box (1, 10, 10'), operating the check valve (51, 52) to block a second flammable gas flowing from the second duct (41, 42) from flowing into the first enclosure (21, 22).

11. The method as claimed in claim 9 or 10, wherein:
determining whether the fire detection signal is generated comprises determining whether the fire detection signal is generated based on at least one measurement from the fire detection sensor (110).

12. The method as claimed in claim 11, wherein the fire detection sensor (110) is a temperature sensor and/or a smoke detector.

13. The method as claimed in claim 11, wherein the fire detection sensor (110) is a pressure sensor mounted on the deflagration panel (31, 32).
